# EUROPÄISCHE PATENTSCHRIFT

(11) **EP 2 172 357 B1**
(45) Veröffentlichungstag und Bekanntmachung des Hinweises auf die Patenterteilung: **08.06.2011**
(21) Anmeldenummer: 09010793.9
(22) Anmeldetag: 24.08.2009
(51) Int. Cl.: B60K 11/08

(54) **Vorrichtung zur Steuerung des Luftdurchsatzes eines Lufteinlasses**
Device for controlling the air throughput of an air hole
Dispositif de commande du débit d'air d'une entrée d'air

(30) Priorität: 01.10.2008 DE 102008049876
(43) Veröffentlichungstag der Anmeldung: 07.04.2010
(73) Patentinhaber: Brose Fahrzeugteile GmbH & Co. KG, Würzburg, 97076 Würzburg (DE)
(72) Erfinder: Fischer, Matthias, 96250 Ebensfeld (DE); Neudert, Michael, 96450 Coburg (DE); Macht, Alwin, 96250 Ebensfeld (DE); Karsch, Hans-Ulrich, 96271 Grub (DE)
(74) Vertreter: Meyer, Thorsten

(56) Entgegenhaltungen:
- EP-A- 0 179 304
- EP-A- 0 254 815
- GB-A- 1 212 478
- US-A- 911 457
- US-A- 1 421 120
- US-A- 4 732 010
- US-A- 5 490 395
- US-B1- 6 354 096

## Beschreibung

Die Erfindung betrifft eine Vorrichtung gemäß den Oberbegriff des Anspruchs 1.

Eine solche Vorrichtung ist aus US 6,354,096 bekannt. Verbrennungsmotoren arbeiten am besten, wenn sie auf Betriebstemperatur sind. Insbesondere im Winter kann es daher nachteilig sein, dass die Fahrtwind-bedingte Kühlung den Kühlkreislauf unnötigerweise auf die möglicherweise zu kalte Umgebungsluft herunterkühlt, was zu Materialverschleiß des Motors und unnötigem Treibstoffverbrauchs während der durch die ungewollte Kühlung verlängerten Anwärmphase des Motors führt.

Aus der DE 10 2004 026 419 A1 ist eine Vorrichtung zur Abstimmung des Luftdurchsatzes durch im Frontbereich eines Kraftfahrzeuges vorgesehene Eintrittsöffnungen zur Einstellung der Luftzuströmung bekannt, mit einer einer oberen Luftabgriffszone zugeordneten oberen Abgriffsschachteinrichtung, wobei Stellmittel vorgesehen sind zur Abstimmung eines den die obere Abgriffsschachteinrichtung durchsetzenden Luftstromes. Hierzu sind axial über einen störanfälligen Mechanismus zu betätigende drehbare Lamellen vorgesehen, die den Luftstrom sperren können.

Aus der EP 179304 A1 ist eine direkt an einem Motorkühler anliegende Kühlerjalousie für Kraftfahrzeug bekannt, die aus einem am Kühler ortsfesten Lamellengitter und mehreren, gegenüber diesem ortsfesten Gitter bewegbaren Schiebegittern besteht, welche ebenfalls aus untereinander verbundenen Lamellen bestehen. Hierdurch soll sich unter Beibehaltung der Vorteile der Schiebejalousie die freie durchströmte Querschnittsfläche im voll geöffneten Zustand der Jalousie vergrößern. Die Schiebegitter sollen dabei über einen Kipphebel betätigt werden, an dem die Kolbenstange des Arbeitskolbens eines Dehnstoffelements angreift. Die Lamellen der außen liegenden Gitter sollen strömungsgünstig profiliert sein. Nachteilig hierbei ist, dass durch die durch den Antrieb und dessen notwendige Anordnung direkt am Kühler eine gesteuerte Betätigung in Abhängigkeit der Außentemperatur nicht möglich ist.

Aufgabe der Erfindung ist es eine verbesserte Vorrichtung zur Steuerung des Luftdurchsatzes eines Lufteinlasses im Frontbereich eines Kraftfahrzeugs zur Verfügung zu stellen, bei der insbesondere eine Einsparung von Kraftstoff durch eine aktive Steuerung ermöglicht ist.

Diese Aufgabe wird durch eine Vorrichtung zur Steuerung des Luftdurchsatzes nach den Merkmalen des Anspruchs 1 gelöst.

Erfindungsgemäß ist vorgesehen, dass die Sperrvorrichtung wenigstens zwei gegeneinander verschiebbare Sperrelemente aufweist, die durch die Verschiebung zueinander die Öffnungsweite bestimmen, wobei zur Verschiebung wenigstens eines der Sperrelemente eine Fremdkraft-betätigter Exzenter vorgesehen ist.

Die Fremdkraft-Betätigung kann dabei durch einen motorischen, magnetischen, hydraulischen oder pneumatischen Antrieb, als auch durch einen durch Bi-Metallverformung begründeten Antrieb hervorgerufen sein.

Nach der Erfindung ist vorgesehen, dass der Antrieb des Exzenters an einem ersten Sperrelement gelagert ist und der Exzenter in einer Exzenter-Führung eines zweiten Sperrelements geführt ist.

Von Vorteil weisen die Sperrelemente eine Vielzahl von insbesondere schlitzförmigen Öffnungen auf, die gegeneinander in Deckung gebracht werden können, so dass der Luftdurchsatz maximiert ist.

Bevorzugterweise steuert die Vorrichtung die obere Luftabgriffszone der Kühlluftzuführung des Kraftfahrzeugs.

Nach einer bevorzugten Ausgestaltung ist vorgesehen, dass das erste Sperrelement an dem zweiten Sperrelement in einer Zwangsführung gelagert ist, die nur eine parallele Verschiebung der Sperrelemente zueinander erlaubt.

Von Vorteil sind die Führung der Luftströmung und/oder das sich durch die gegeneinander in Deckung gebrachten schlitzförmigen Öffnungen bildende Gitter stromlinienförmig ausgestaltet.

Vorteilhafterweise ist in oder an dem ersten oder zweiten Sperrelement eine Heizvorrichtung vorgesehen, die abhängig von der Temperatur der zu führenden Luft und/oder der Umgebungstemperatur steuerbar ist.

Der dazu von Vorteil vorgesehene Temperatursensor ist bevorzugterweise über das im Kfz ohnehin vorhandene Bussystems (LIN/CAN) mit dem zentralen (Motor-) Steuergerät verbunden, so dass die in Abhängigkeit der aktuell gemessenen Umgebungstemperatur sowie der aktuellen Motortemperatur die Öffnungsweite der Sperrvorrichtung eingestellt wird. Hierbei sind natürlich auch Stellungen zwischen der maximalen und minimalen Öffnungsweite quasi stufenlos denkbar.

Bevorzugterweise ist die Heizvorrichtung durch einen in das Material des Sperrelements eingearbeiteten elektrischen Widerstand ausgebildet ist.

Dem folgend ist von Vorteil der elektrische Widerstand ein in oder auf das Sperrelement ein- bzw. aufgebrachter Heizdraht. In einer weiteren Ausgestaltungsvariante ist zumindest eines der Sperrelemente zumindest bereichsweise aus einem elektrisch leitfähigen Kunststoff bestehen, welches wie der Heizdraht mit Strom beaufschlagt werden kann.

Nach einer Variante der Erfindung kann die Heizvorrichtung durch eine das Kühlwasser des Motors führende Kapillare innerhalb mindestens eines der Sperrelemente gebildet sein.

Von Vorteil ist dem ersten und/oder zweiten Sperrelement eine Lage- oder Endlage-Sensor zugeordnet, vermittels welchem der aktuelle Zustand der Sperrvorrichtung ermittelt werden kann. Zur Enteisung kann des Weiteren von Vorteil vorgesehen sein, dass bei geöffneter und durch Vereisung blockierter Sperrelemente das Lüfterrad des Kühlers entgegen der normalen Drehrichtung betätigt wird, sodass durch den Motor und/oder den Kühler erwärmte Luft gegen die vereisten Sperrelemente zu deren Freigabe durch Aufschmelzung der Vereisung gelenkt wird.

Nach einer Ausgestaltung der Erfindung ist vorgeschlagen, dass eine Steuerung vorgesehen ist, die den Lage- oder Endlage-Sensor auswertet und bei einer ermittelten Fehlstellung die Heizvorrichtung aktiviert und/oder ein Signal an die Kraftfahrzeugelektronik liefert.

Bevorzugterweise ist eine Steuerung vorgesehen, die bei Abschalten des Motors des Kraftfahrzeugs die Sperrvorrichtung in den Zustand "geöffnet" versetzt.

Weitere vorteilhafte Ausgestaltungen ergeben sich aus den weiteren Unteransprüchen oder deren mögliche Unterkombinationen.

Die in den Figuren gleichen Bezugsziffern bezeichnen gleiche oder gleich wirkende Elemente.
- Fig. 1: eine schematische Schnittdarstellung einer erfin- dungsgemäßen Vorrichtung zur Steuerung des Luft- durchsatzes,
- Fig. 2.: eine vergrößerte Darstellung des Details II aus Fig. 1,
- Fig. 3: eine Ansicht von schräg hinten gesehen auf die Vor- richtung zur Steuerung des Luftdurchsatzes im mon- tierten Zustand,
- Fig. 4: eine Ansicht von schräg hinten gesehen auf die Vor- richtung zur Steuerung des Luftdurchsatzes mit ge- öffnetem Gehäuse des Antriebs,
- Fig. 5: eine.Ansicht von schräg hinten gesehen auf die Vor- richtung zur Steuerung des Luftdurchsatzes mit de- montiertem Antrieb,
- Fig. 6: eine Ansicht von schräg hinten gesehen auf die Vor- richtung zur Steuerung des Luftdurchsatzes mit de- montiertem ersten Sperrelement und Blick auf den Ex- zenter und dessen Führung,
- Fig. 7: eine Ansicht von der Seite auf die Vorrichtung zur Steuerung des Luftdurchsatzes im montierten Zustand,
- Fig. 8: eine Ansicht von hinten auf die Vorrichtung zur Steuerung des Luftdurchsatzes im montierten Zustand, und
- Fig. 9: eine Ansicht von vorne auf die Vorrichtung zur Steu- erung des Luftdurchsatzes im montierten Zustand.

Die in den Figuren gleichen Bezugsziffern bezeichnen gleiche oder gleich wirkende Elemente.

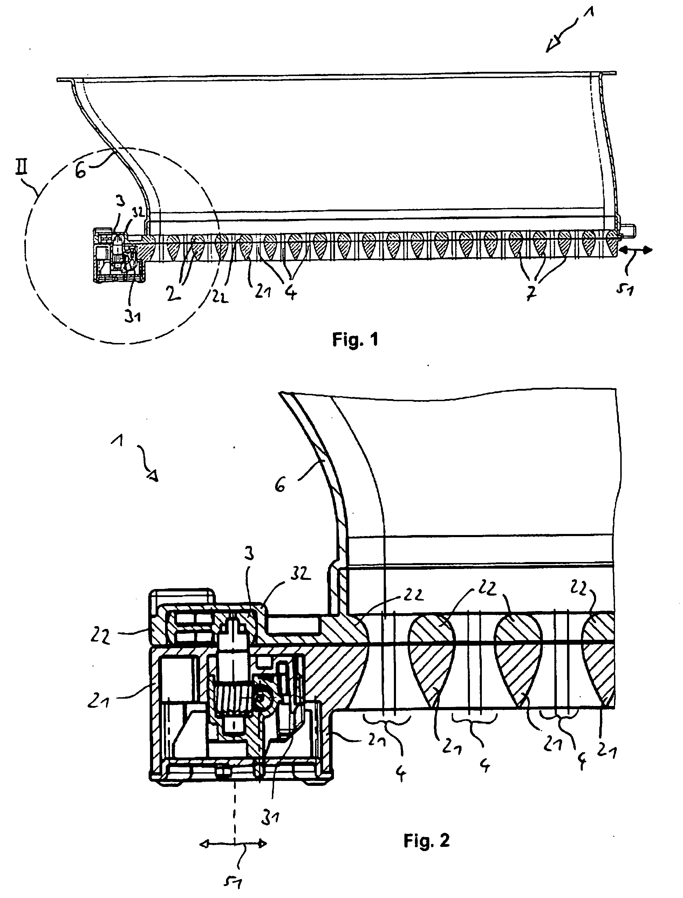

In Fig. 1 ist eine schematische Schnittdarstellung einer erfindungsgemäßen Vorrichtung 1 zur Steuerung des Luftdurchsatzes gezeigt. In der Zeichnung im oberen Bereich wird die Luft durch die stromlinienförmige Führung der Luftströmung 6 auf eine Sperrvorrichtung 2 für den Luftstrom gelenkt, deren Öffnungsweite einstellbar ist, und ein Gitter 7 bildet, deren Stäbe im Querschnitt strömungsgünstig tropfenförmig ausgebildet sind.

Die Sperrvorrichtung 2 weist zwei gegeneinander verschiebbare Sperrelemente 21 und 22 auf, die durch die Verschiebung zueinander die Öffnungsweite (Öffnungen 4 in der Gesamtheit) bestimmen. Die Sperrelemente 21, 22 weisen eine Vielzahl von schlitzförmigen Öffnungen 4 auf, die gegeneinander in Deckung gebracht werden können, so dass der Luftdurchsatz dann in der Stellung "geöffnet" maximiert ist.

In Fig. 2 ist eine vergrößerte Darstellung des Details II aus Fig. 1 gezeigt. Hier ist besser ersichtlich, dass der motorische Antrieb 31 als Fremdkraft-Betätigung des Exzenters 3 an dem ersten Sperrelement 21 gelagert ist und der Exzenter 3 in einer Exzenter-Führung 32 des zweiten Sperrelements 22 geführt ist. Durch die Drehbewegung des am ersten Sperrelement 21 gelagerten Exzenters 3 wird zwangsweise das erste Sperrelement 21 gegenüber dem zweiten Sperrelement 22 bewegt.

Die Kraft des motorischen Antriebs 31 wird hierzu mittels eines Schneckentriebes auf den Exzenter 3 übertragen.

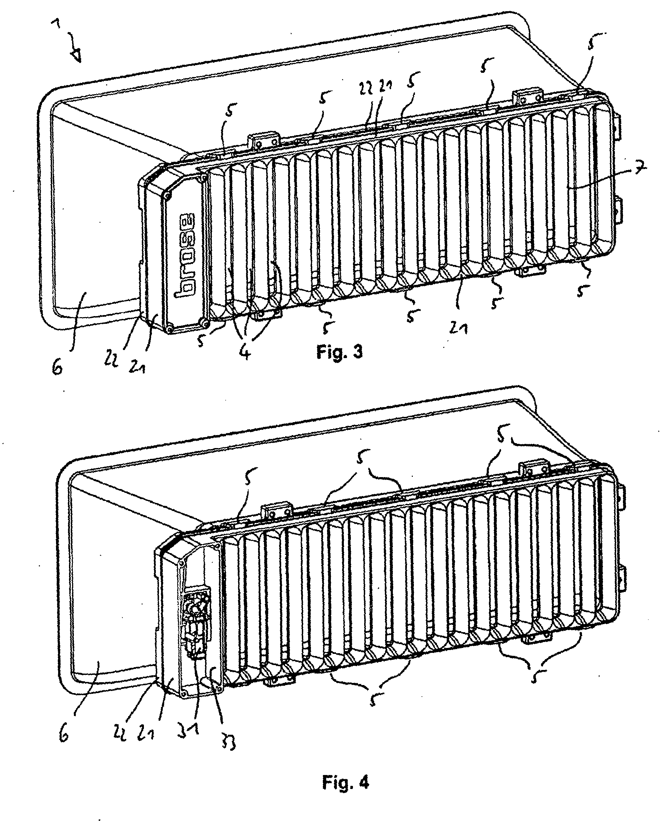

Fig. 3 zeigt eine Ansicht von schräg hinten gesehen auf die Vorrichtung 1 im montierten Zustand. Hierbei ist die Zwangsführung 5 gut zu sehen, die an dem zweiten Sperrelement 22 angeformt ist und in der das erste Sperrelement 21 gelagert ist. Hierdurch kann das erste Sperrelement nur eine parallele Verschiebung (Pfeil 51) Bewegung zum zweiten, ortsfesten Sperrelement vollführen.

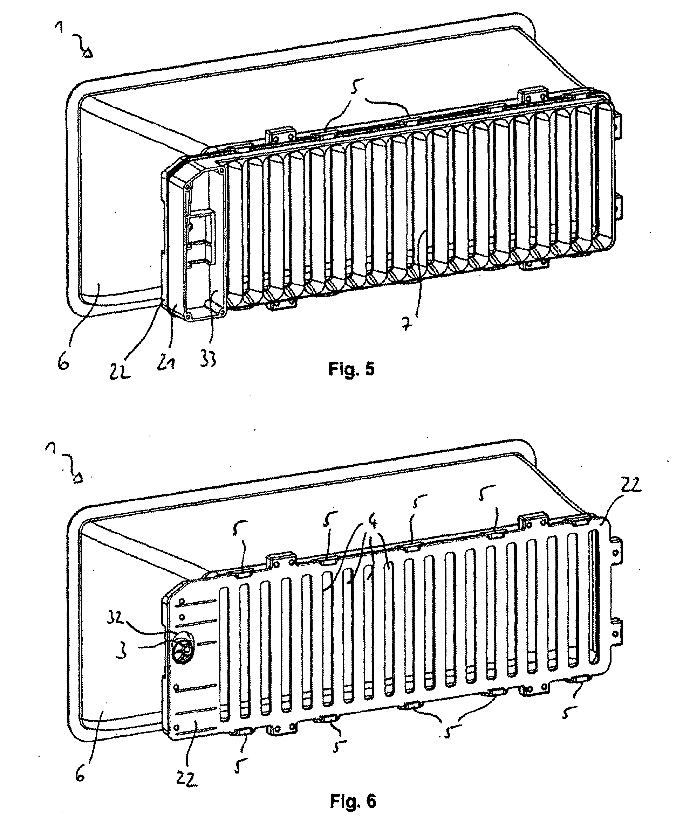

In Fig. 4 eine Ansicht von schräg hinten auf die Vorrichtung 1 gezeigt, wobei das zum Schutz des Antriebs vorgesehene Gehäuse 33 geöffnet ist. Fig. 5 zeigt dieselbe Ansicht mit demontiertem Antrieb.

In Fig. 6 ist wieder in Ansicht von schräg hinten gesehen mit demontiertem ersten Sperrelement der Blick auf den Exzenter 3 und dessen gegenüber diesem ortsfester Führung 32 in Form eines Langlochs ermöglicht.

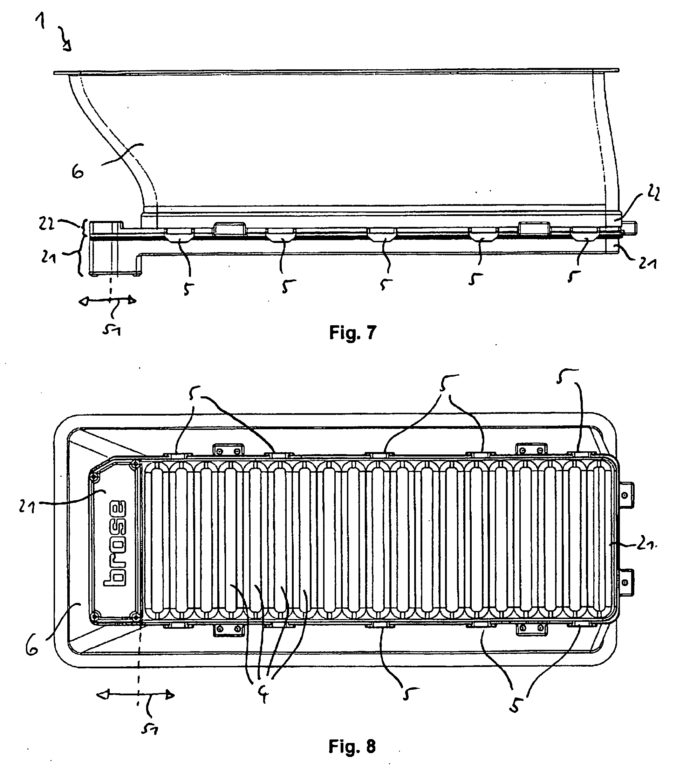

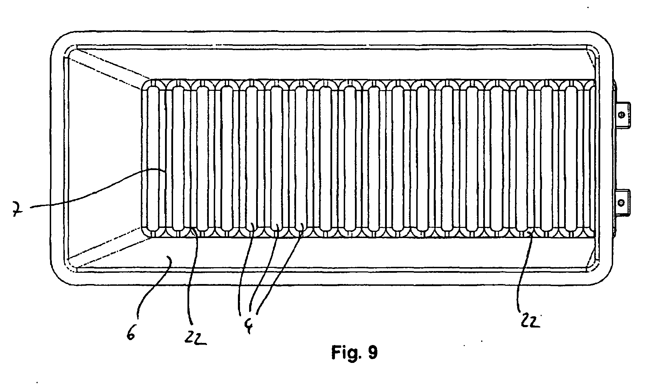

In den Fig. 7, Fig. 8 und Fig. 9 sind weitere Ansichten auf die erfindungsgemäße Vorrichtung von der Seite, von hinten und von vorne, also in Richtung des Luftstromes gezeigt.

### Bezugszeichenliste

- 1: Vorrichtung zur Steuerung des Luftdurchsatzes

- 2: Sperrvorrichtung
- 21: Sperrelement
- 22: Sperrelement

- 3: Exzenter
- 31: Antrieb
- 32: Exzenter-Führung
- 33: Gehäuse

- 4: Öffnung

- 5: Zwangsführung
- 51: Pfeil

- 6: Führung der Luftströmung

- 7: Gitter

## Patentansprüche

1. Vorrichtung (1) zur Steuerung des Luftdurchsatzes eines Lufteinlasses im Frontbereich eines Kraftfahrzeugs,
wobei im Querschnitt der Öffnung des Lufteinlasses oder einer sich daran anschließenden Führung der Luftströmung (6) eine Sperrvorrichtung (2) für den Luftstrom vorgesehen ist, deren Öffnungsweite einstellbar ist,
wobei die Sperrvorrichtung (2) wenigstens zwei gegeneinander verschiebbare Sperrelemente (21, 22) aufweist, die durch die Verschiebung zueinander die Öffnungsweite bestimmen,
wobei zur Verschiebung wenigstens eines der Sperrelemente (21) ein Fremdkraft-betätigter Exzenter (3) vorgesehen ist, und **dadurch gekennzeichnet, daß** der Antrieb (31) des Exzenters (3) an einem ersten Sperrelement (21) gelagert ist und der Exzenter (3) in einer Exzenter-Führung (32) eines zweiten Sperrelements (22) geführt ist.

2. Vorrichtung nach Anspruch 1,
**dadurch gekennzeichnet,**
**dass** die Sperrelemente (21, 22) eine Vielzahl von insbesondere schlitzförmigen Öffnungen (4) aufweisen, die gegeneinander in Deckung gebracht werden können, so dass der Luftdurchsatz maximiert ist.

3. Vorrichtung nach einem der vorhergehenden Ansprüche,
**dadurch gekennzeichnet,**
**dass** diese die obere Luftabgriffszone der Kühlluftzuführung des Kraftfahrzeugs steuert.

4. Vorrichtung nach einem der vorhergehenden Ansprüche,
**dadurch gekennzeichnet,**
**dass** das erste Sperrelement (21) an dem zweiten Sperrelement (22) in einer Zwangsführung (5) gelagert ist, die nur eine parallele Verschiebung (51) der Sperrelemente (21, 22) zueinander erlaubt.

5. Vorrichtung nach einem der Ansprüche 2 bis 4,
**dadurch gekennzeichnet,**
**dass** die Führung der Luftströmung (6) und/oder das sich durch die gegeneinander in Deckung gebrachten schlitzförmigen Öffnungen (4) bildende Gitter (7) stromlinienförmig ausgestaltet sind.

6. Vorrichtung nach einem der vorhergehenden Ansprüche,
**dadurch gekennzeichnet,**
**dass** in oder an dem ersten (21) oder zweiten (22) Sperrelement eine Heizvorrichtung vorgesehen ist, die abhängig von der Temperatur der zu führenden Luft und/oder der Umgebungstemperatur steuerbar ist.

7. Vorrichtung nach Anspruch 6,
**dadurch gekennzeichnet,**
**dass** die Heizvorrichtung durch einen in das Material des Sperrelements eingearbeiteten elektrischen Widerstand ausgebildet ist.

8. Vorrichtung nach Anspruch 7,
**dadurch gekennzeichnet,**
**dass** der elektrische Widerstand ein Heizdraht oder ein elektrisch leitfähiges Kunststoff ist.

9. Vorrichtung nach Anspruch 8,
**dadurch gekennzeichnet,**
**dass** die Heizvorrichtung durch Kühlwasser des Motors des Kraftfahrzeugs führende Kapillare gebildet ist.

10. Vorrichtung nach einem der vorhergehenden Ansprüche,
**dadurch gekennzeichnet,**
**dass** dem ersten (21) und/oder zweiten (22) Sperrelement eine Lage- oder Endlage-Sensor zugeordnet ist, vermittels welchem der aktuelle Zustand der Sperrvorrichtung ermittelt werden kann.

11. Vorrichtung nach Anspruch 10,
**dadurch gekennzeichnet,**
**dass** eine Steuerung vorgesehen ist, die den Lage- oder Endlage-Sensor auswertet und bei einer ermittelten Fehlstellung die Heizvorrichtung aktiviert und/oder ein Signal an die Kraftfahrzeugelektronik liefert.

12. Vorrichtung nach einem der vorhergehenden Ansprüche,
**dadurch gekennzeichnet,**
**dass** eine Steuerung vorgesehen ist, die bei Abschalten des Motors des Kraftfahrzeugs die Sperrvorrichtung in den Zustand "geöffnet" versetzt.

## Claims

1. A device (1) for controlling the air throughput of an air inlet in the front region of a motor vehicle,
wherein a blocking device (2) for the air stream is provided in the cross section of the opening of the air inlet or an adjoining guide of the air flow (6), the opening width of which blocking device can be adjusted,
wherein the blocking device (2) has at least two blocking elements (21, 22) which can be displaced towards each other and define the opening width by the displacement towards each other,
wherein a cam (3) which is actuated by external force is provided to displace at least one of the blocking elements (21),
and **characterised in that** the drive (31) of the cam (3) is mounted on a first blocking element (21) and the cam (3) is guided in a cam guide (32) of a second blocking element (22).

2. The device according to Claim 1,
**characterised in that**
the blocking elements (21, 22) have a multiplicity of in particular slot-shaped openings (4) which can be made to line up with each other so that the air throughput is maximised.

3. The device according to one of the preceding claims,
**characterised in that**
it controls the upper air intake zone of the cooling air feed of the motor vehicle.

4. The device according to one of the preceding claims,
**characterised in that**
the first blocking element (21) is mounted in a restricted guidance device (5) on the second blocking element (22), which restricted guidance device only allows a parallel displacement (51) of the blocking elements (21, 22) with respect to each other.

5. The device according to one of Claims 2 to 4,
**characterised in that**
the guide of the air flow (6) and/or the grid (7) formed by the slot-shaped openings (4) which are made to line up with each other are formed in a streamlined manner.

6. The device according to one of the preceding claims,
**characterised in that**
a heating device is provided in or on the first (21) or second (22) blocking element, which heating device can be controlled as a function of the temperature of the air to be guided and/or the ambient temperature.

7. The device according to Claim 6,
**characterised in that**
the heating device is formed by an electrical resistor incorporated in the material of the blocking element.

8. The device according to Claim 7,
**characterised in that**
the electrical resistor is a heating wire or an electrically conductive plastic.

9. The device according to Claim 8,
**characterised in that**
the heating device is formed by capillaries conducting cooling water of the engine of the motor vehicle.

10. The device according to one of the preceding claims,
**characterised in that**
a position or end position sensor is assigned to the first (21) and/or second (22) blocking element, by means of which the current status of the blocking device can be determined.

11. The device according to Claim 10,
**characterised in that**
a control system is provided which evaluates the position or end position sensor and activates the heating device and/or sends a signal to the motor vehicle electronics if an incorrect position is determined.

12. The device according to one of the preceding claims,
**characterised in that**
a control system is provided which sets the blocking device in the "open" status when the engine of the motor vehicle is switched off.

## Revendications

1. Dispositif (1) pour commander le débit d'air d'une entrée d'air dans la zone avant d'un véhicule automobile, un dispositif de blocage (2), dont la largeur d'ouverture est réglable, étant prévu pour le flux d'air dans la section de l'ouverture de l'entrée d'air ou d'un guide s'y raccordant de l'écoulement d'air (6),
le dispositif de blocage (2) présentant au moins deux éléments de blocage (21, 22) coulissant l'un par rapport à l'autre, qui déterminent la largeur d'ouverture par le coulissement de l'un par rapport à l'autre,
un excentrique (3) activé par une force extérieure étant prévu pour le déplacement d'au moins l'un des éléments de blocage (21),
et **caractérisé en ce que** l'entraînement (31) de l'excentrique (3) est monté sur un premier élément de blocage (21) et l'excentrique (3) est guidé dans un guide d'excentrique (32) d'un second élément de blocage (22).

2. Dispositif selon la revendication 1,
**caractérisé en ce que**
les éléments de blocage (21, 22) présentent une pluralité d'ouvertures (4) en particulier en forme de fente, qui peuvent être amenées en recouvrement les unes par rapport aux autres, de sorte que le débit d'air est maximisé.

3. Dispositif selon l'une quelconque des revendications précédentes,
**caractérisé en ce que**
ce dispositif commande la zone de prélèvement d'air supérieure de l'arrivée d'air de refroidissement du véhicule automobile.

4. Dispositif selon l'une quelconque des revendications précédentes,
**caractérisé en ce que**
le premier élément de blocage (21) est monté sur le second élément de blocage (22) dans un guidage forcé (5), qui permet uniquement un coulissement (51) parallèle des éléments de blocage (21, 22) l'un par rapport à l'autre.

5. Dispositif selon l'une quelconque des revendications 2 à 4,
**caractérisé en ce que**
le guidage de l'écoulement d'air (6) et/ou de la grille (7), qui se forme par les ouvertures (4) en forme de fente et mises en recouvrement les unes par rapport aux autres, sont conçus sous forme de lignes de courant.

6. Dispositif selon l'une quelconque des revendications précédentes,
**caractérisé en ce**
**qu'**un dispositif de chauffage, qui peut être commandé en fonction de la température de l'air à guider et/ou de la température ambiante, est prévu dans ou sur le premier élément de blocage (21) ou le second élément de blocage (22).

7. Dispositif selon la revendication 6,
**caractérisé en ce que**
le dispositif de chauffage est formé par une résistance électrique intégrée dans le matériau de l'élément de blocage.

8. Dispositif selon la revendication 7,
**caractérisé en ce que**
la résistance électrique est un fil de chauffage ou un plastique électroconducteur.

9. Dispositif selon la revendication 8,
**caractérisé en ce que**
le dispositif de chauffage est formé par des tubes capillaires guidant de l'eau de refroidissement du moteur du véhicule.

10. Dispositif selon l'une quelconque des revendications précédentes,
**caractérisé en ce que**
un capteur de position ou de position finale, au moyen duquel l'état actuel du dispositif de blocage peut être déterminé, est attribué au premier élément de blocage (21) et/ou au second élément de blocage (22).

11. Dispositif selon la revendication 10,
**caractérisé en ce**
**qu'**une commande est prévue, laquelle analyse le capteur de position ou le capteur de position finale et active le dispositif de chauffage dans le cas d'une mauvaise position déterminée et/ou fournit un signal à l'électronique du véhicule.

12. Dispositif selon l'une quelconque des revendications précédentes,
**caractérisé en ce**
**qu'**il est prévu une commande qui met le dispositif de blocage dans l'état "ouvert" en cas d'arrêt du moteur du véhicule.
